# EUROPEAN PATENT SPECIFICATION

(11) **EP 4 339 922 B1**
(45) Date of publication and mention of the grant of the patent: **20.11.2024**
(21) Application number: 22195612.1
(22) Date of filing: 14.09.2022
(51) Int. Cl.: G09B 21/00, G06F 3/01

(54) **ACTUATION MECHANISM, ACTUATION DEVICE AND METHODS FOR USING SAID ACTUATION MECHANISM AND ACTUATION DEVICE**
BETÄTIGUNGSMECHANISMUS, BETÄTIGUNGSVORRICHTUNG UND VERFAHREN ZUR VERWENDUNG DES BETÄTIGUNGSMECHANISMUS UND BETÄTIGUNGSVORRICHTUNG
MÉCANISME D'ACTIONNEMENT, DISPOSITIF D'ACTIONNEMENT ET PROCÉDÉS D'UTILISATION DUDIT MÉCANISME D'ACTIONNEMENT ET DUDIT DISPOSITIF D'ACTIONNEMENT

(43) Date of publication of application: 20.03.2024
(73) Proprietor: Karlsruher Institut für Technologie, 76131 Karlsruhe (DE)
(72) Inventor: JOSEPH, Joel, 76297 Stutensee (DE); KOHL, Manfred, 76297 Stutensee (DE)
(74) Representative: mepat Patentanwälte

(56) References cited:
- WO-A1-02/35511
- WO-A1-2020/183439
- CN-A- 108 281 070
- DE-B4- 102019 109 192
- US-A1- 2005 069 842
- US-A1- 2020 211 418

## Description

The invention refers to an actuation mechanism, an actuation device and methods for using both of said actuation mechanism and said actuation device.

Actuation devices especially required for Braille refreshable displays suitable for visually impaired people use piezoelectric bimorph cantilevers in order to move pins up and down and form retractable letters for texts in Braille. To move one pin, each pin has to be elevated by one cantilever. In the state of the art these cantilevers have to have a certain length with regard to the elevation of each pin, being very long in comparison to the length of said pin. For example, for an elevation of about 500 µm to 1 mm of one pin, the corresponding cantilever needs to be around 40 mm long, so that a display matrix with 8 pins for one braille letter in Unicode takes up a certain space. This creates a maximum of how many lines of text can be shown on a display due to the size of the actuation device, right now the maximum is two. Patent document DE 10 2019 109 192 B4 discloses a bistable actuator system for a Braille display where actuator elements each have an electrothermal in-plane actuator and a lifting actuator comprising a magnetic drive for moving pins. Other solutions, such as US2005/0069842 A1, disclose thermoelectric spring-based actuators for moving pins of a Braille display.

It is therefore the object of the invention to provide a constructional simple and compact actuation mechanism and device with which pins can be elevated easily.

This object is solved by the actuation mechanism with the features of claim 1 and by the actuation device with the features of claim 7.

The further object of providing a method in order to give a simple way to elevate pins in a compact actuation mechanism is solved by the method for using an actuation mechanism with the features of claim 12 and the method for using an actuation device with the features of claim 13.

Preferred embodiments of the actuation mechanism, the actuation device and the methods are described in the dependent claims.

A first embodiment of the device of the invention refers to an actuation mechanism comprising one pin to be actuated, wherein said one pin is magnetic. The actuation mechanism comprises a housing element holding an elastic element that is coupled with a bottom end of said magnetic pin. "Coupled" meaning herein any kind of connection between two component parts, with or without any adhesives, connecting elements or even form-fit.

The actuation mechanism further comprises a thermoelectric layer and a thermomagnetic layer, wherein the thermoelectric layer is coupled to the thermomagnetic layer which are both located beneath the elastic element, wherein the thermoelectric layer is connected to an electrical energy source. Said thermoelectric layer is designed to change the magnetization of said thermomagnetic layer from a magnetic state into a non-magnetic state and reverse, wherein said thermomagnetic layer provides respectively attraction or non-attraction of said magnetic pin. The mechanism provides two states of the pin, an initial state and a lowered state, wherein during a lowered state of said pin attraction of said pin and deflection of the elastic element towards the thermomagnetic layer is provided, and wherein during an initial state of said pin said pin is being unattracted towards said thermomagnetic layer and the elastic element is in a neutral position.

This mechanism is advantageously constructed in a simple way and forms a very compact possibility to actuate one pin. The movement of the pin is caused simply by the attraction or non-attraction of the magnetic pin to the thermomagnetic layer which is either magnetic or non-magnetic, depending on the temperature of the thermoelectric layer. Compared to the actuator volume, the pin can perform a large stroke.

The "thermomagnetic layer" herein refers to a layer or component comprising thermomagnetic materials, which can vary their magnetization based on either temperature, magnetic field or both. Thus, when the material is at a certain (low) temperature, the material can be ferromagnetic and at a comparatively high temperature, it can become paramagnetic, or reverse. This can be achieved by changing the composition of the material or by changing its alloy components. The thermomagnetic material is chosen based on the operating temperature requirements. This allows to choose from a wide variety of thermomagnetic materials such as Ni-Mn-Ga, La-Fe-Si, La-Fe-Si-Co or Ni-Mn-In alloys. The thermomagnetic layer can be in any geometrical shape, wherein for easier lining in a housing it can be formed in a cuboidal shape. The thickness of the material can be adjusted to adjust the force experienced by the magnetic pin.

The "thermoelectric layer" refers to materials that can generate a potential across its dimension when each end is subjected to a different temperature, which is called the Seebeck effect. This effect also works in reverse and is called a Peltier effect, which creates a temperature difference at its ends when a potential is applied to the material. This can be used to create a certain temperature difference in order to heat or to cool the thermomagnetic layer which is coupled to the thermoelectric layer. One preferred material is bismuth telluride. Other materials can be lead telluride or oxide based thermoelectrics like nickel lithium oxide or zinc aluminium oxide. Advantageously these materials form easily as thin films.

According to a preferred embodiment of the actuation mechanism the magnetic pin is made out of a permanent magnetic material. Preferably, permanent magnets out of a ferromagnetic material are used to manufacture the pin. The pin is cuboidal or cylindrical, either with a rectangular cross-section or a circular cross-section. The upper end of the pin forms an outlet part which is the part to be touched by a visually impaired person and can be rounded for easy touch, but can also be used with a straight edge on both ends.

According to another embodiment of the actuation mechanism, the pin has a ring portion around its shaft. Either the permanent magnet pin can be made in this shape or the ring can be made separately and attached to the pin at the right position. The ring portion is also used to apply the pre-strain to the elastic element when the mechanism is assembled. The elastic element is assembled by arranging and mounting the edges to the top edge of the vertical wall, then when the magnetic pin is assembled the ring causes the elastic element to deform and this deformation is the pre-strain applied to the elastic element. The height to diameter ratio will affect the magnetic field gradient of the mechanism and this allows for a wide variety of tuning opportunities to change the actuation force and actuation speed of the pin.

Preferably, the bottom end of the magnetic pin as well as the elastic element are distanced to the thermomagnetic layer of about a height of the outlet part of the magnetic pin. In other words, this distance defines the total travel of the pin. Exemplary the total size of the pin could be 1.5 mm diameter and 3 mm height, the distance between pin and thermomagnetic layer could be 0.5 mm after assembling. In case of Braille applications, this could be adjusted if required to have different stroke lengths.

According to another embodiment of the actuation mechanism the housing element comprises a vertical wall, topped by an upper edge, said upper edge holding the elastic element. The vertical wall can be of cylindrical shape forming a sort of mantelpiece with a rectangular or round cross-section. Alternate shaped cross-sections are possible. The upper edge can in a further embodiment of the actuation mechanism have indentions or recesses adapted for receiving and holding the elastic element. The elastic element can be bonded to the edges of the vertical wall. It is also possible to achieve the same effect by using an alignment pin in vertical wall or housing and corresponding hole in elastic element.

Further, in yet another embodiment of the actuation mechanism according to the invention, the housing element comprises a circular middle edge, provided at an inner part of the wall, said middle edge providing a retainer for the thermomagnetic layer.

"Circular" herein meaning circumferential, being either in any rectangular or round shape, wherein the middle edge can form a protrusion extending into the interior of the housing, also forming an attachment or support for the thermomagnetic layer. The circular middle edge further functions as a distance piece with regard to the magnetic pin, which is attracted to the thermomagnetic layer, when the latter is in its magnetic state.

According to another embodiment of the actuation mechanism according to the invention, the height of a section of the vertical wall of the housing element below the circular middle edge corresponds to both, the height of the thermoelectric layer and the thermomagnetic layer placed on said thermoelectric layer.

According to another embodiment of the actuation mechanism according to the invention, the thermoelectric layer is arranged below the thermomagnetic layer, which itself is located under the magnetic pin. Other arrangement might as well be possible, depending on the strength of the magnetic field induced in the thermomagnetic layer.

According to yet another embodiment of the actuation mechanism according to the invention, the elastic element is a planar spring or a leaf spring or a spiral leaf spring. The elastic element refers to any planar spring that has a large lateral area compared to its thickness. This type of spring is used to generate spring force in or out of plane direction and is used in the actuation mechanism to generate the required spring force needed to reset the mechanism. The spring also provides the necessary resistive force required to hold the pin under pressure (from human touch), so that if in a raised state the pin stays in this position as long as necessary. The planar spring is placed below the permanent magnet pin and then when the housing is assembled, the spring will be pre-strained, this pre-straining can be varied by changing the position of the ring portion of the magnetic pin or by changing the design or material of the elastic element to have a different strain. The pre-strain is used to provide the resistive force required while operating refreshable display (to resist human touch, so that pin does not move down when touched). Adjusting the pre-strain allows to have either higher or lower resistive force and actuation force. The thickness of the spring can be varied to adjust the actuation force and resistive force while keeping the strain and pre-strain constant. The elastic element can also be a super elastic shape memory alloy. Using such a material allows to have a high strain that can be recovered completely on removal of force. This is beneficial when scaling the device for other applications, with the device being larger than for Braille displays.

According to yet another embodiment of the actuation mechanism according to the invention, the actuation mechanism comprises a shape memory element which is located beneath the elastic element layer and therefore also connected to the bottom of each pin. The shape memory element serves as an additional actuator element that can be provided by using a one-way shape memory planar spring (with memory shape as plane), which will enable the actuation mechanism to be tuned to operate in bistable conditions. As this configuration enables bistable actuation and thus does not require continuous power to keep the thermomagnetic element in a particular temperature. The actuation is achieved by a combination of thermomagnetic actuation and shape memory effect. The shape memory element is actuated by selective heating (using a small current pulse through the material causing heat by using internal resistance of the shape memory element). Thus by activating both shape memory element and thermomagnetic element, it is possible to change the state (up or down state of pin). This increases the efficiency of the mechanism and the device needs less power as the pin will stay in the position unless the shape memory actuator is actuated, too.

Further, the invention refers to a first embodiment of an actuation device which comprises a plurality of actuation mechanisms, each of which comprising one magnetic pin to be actuated. Herewith, a matrix of actuation mechanisms can be created.

According to an embodiment of the actuation device according to the invention the plurality of actuation mechanisms comprises at least six actuation mechanisms. The actuation device according to the invention could also in another an embodiment have eight actuation mechanisms.

According to a further embodiment of the actuation device, said actuation device comprises an encasement housing all necessary components of the plurality of actuation mechanisms. Said encasement has a base plate with a base area configured to bear the plurality of actuation mechanisms. Further, the encasement comprises an outer wall arranged onto the base plate, wherein said outer wall extends to a top part and said top part has a number of through holes. Each of said through holes is being dedicated to one of the pins and provides an outlet passage for an outlet part of said pin, wherein each of said through holes has first diameter surrounding said outlet part of each pin of the size corresponding to an outer diameter of each pin. The first diameter works as a guidance for the pin in its up and down motion. Additionally, the through hole widens up in direction towards the base plate in a step and forms a second diameter surrounding said pin at a part of said pin adjacent to the upper edge of the housing element of the actuation mechanism. The second diameter is larger than said first diameter and a recess is formed. Each pin comprises a ring portion forming a step and is configured to be positioned within said recess during the initial state of the actuation mechanism. The combination of ring portion and recess works as a retentive or retaining structure, so that the pin does not fall out of the encasement.

Further, the base plate can comprise a heater, preferably a resistive heater, in order to heat the encasement on a constant temperature. There are mainly three temperatures involved T_{cold}<Tc<Tₕₒₜ. T_{cold} is around 2 K (or even less depending on configuration) less than the T_{c} (Curie temperature of the thermomagnetic layer). Likewise, Tₕₒₜ is around 2 K (or less depending on configuration) more than the T_{c}. The heater in the base plate if used to keep the device thermomagnetic layer and thermoelectric layer at Tₕₒₜ. This causes the material to be in paramagnetic state. When a change of state is required, the thermoelectric layer causes the temperature change in the thermomagnetic layer to T_{cold}, causing the material to be ferromagnetic. Changing the state again by using the thermoelectric layer to heat the thermomagnetic layer to Tₕₒₜ for quick actuation.

The encasement houses all actuation mechanism components, which in a preferred embodiment of the actuation device envelops the plurality of at least six actuation mechanisms, which preferably are arranged in pairs. The actuation device is adapted for the use with Braille refreshable displays, since it is compact and can be designed in a small size and be used to display letters in Braille. For this use, it is preferred to employ eight actuation mechanisms, in order to represent each letter of the alphabet, punctuation marks and special characters. Due to the compactness of the actuation device, it is possible to build more than two lines of Braille letters, also a multitude of actuation matrices, forming a two-dimensional display with admeasurements in x- and y-direction, and therefore display complete texts and also represent pictures (like charts, graphs or basic images) in Braille with the corresponding number of actuation devices.

According to a further embodiment of the actuation device of the invention, the base plate comprises at least one electrical wiring, wherein said electrical wiring is connected to the electrical energy source. It is preferred to have one electrical energy source for the whole device. The base plate can be configured as a circuit board or such a circuit board can be attached to the base plate. The thermoelectric layer can easily be electrically connected. Power requirement is restricted by the thermoelectric element. But as only a temperature difference of 4 K is needed for this actuation device, so not the whole potential of the thermoelectric element (for example 70 K) is needed. That's why the power requirement is much lower than that required by the most thermoelectric elements. In numbers a pulse of 500 mA for 500 ms is needed, which can be achieved by 500 mV via a suitable power supply.

In order to monitor the temperatures created by the thermoelectric layer, the encasement can comprise one or more temperature sensors. Such a sensor can be attached in the recess of the encasement, directly on the top plate of the thermoelectric layer or on the thermomagnetic layer. This can also be achieved by a resistive element that changes the electrical resistance based on temperature deposited on the ceramic layer whose resistance can be measured to monitor the temperature. Thermal cross coupling between the actuation mechanisms can be prevented by isolating the housing element.

In order to sense the touch of a person when actuation device is used, a motion sensor, preferably a motion sensor coil can be integrated into the encasement. Since the moving pin is magnetic, its movement can be sensed by using such a coil due to the electromotive force created in the coil due to the changing magnetic field gradient. For example, if the first pin and third pin are in a raised position, i. e. initial position and all other pins are lowered, the pins will move slightly when a person touches them causing a signal in the coil. This signal can be used similar to know the position of the finger of the reader (braille reader) on the display and can also be used for designing an onscreen braille keyboard. Similar to the motion sensor coil the movement of the pin can be sensed by measuring a signal output from the elastic element, if it is coated with a piezo-resistive material on its edge or any suitable area on the elastic element. Piezo-resistive materials generate a change in resistivity of the material when a mechanical strain is applied. When the spring is changing its strain due to the actuation of the pin, the piezo-resistive material will also experience a changing strain and will have a resistance value corresponding to the actuation that can be characterized. Also, the encasement can be equipped with a touch sensing surface.

Another subject matter of the invention is a method for using an actuation mechanism according to the invention comprising one pin to be actuated, wherein said one pin is magnetic, and the actuation mechanism comprises a housing element holding an elastic element that is coupled with a bottom end of said magnetic pin and a thermoelectric layer and a thermomagnetic layer, wherein the thermoelectric layer is coupled to the thermomagnetic layer which are both located beneath the elastic element, wherein the thermoelectric layer is connected to an electrical energy source.

The method comprises the following steps:
- supplying electrical energy to said thermoelectric layer by operating said electrical energy source, thereby
- changing the magnetization of said thermomagnetic layer from a nonmagnetic state into a magnetic state or reverse, and
- providing one of attraction and non-attraction of said coupled magnetic pin,
thereby initiating one of a lowered state of the pin and therefore the actuation mechanism and during same providing attraction of said pin and deflection of the elastic element towards the thermomagnetic layer, and an initial state of the pin and therefore the actuation mechanism and during same said pin being unattracted towards said thermomagnetic layer and having the elastic element in a rest position.

When starting from the initial state of the actuation mechanism, the magnetic pin is in its raised position. In order to move the magnetic pin into a lowered position, the thermoelectric layer is supplied with electrical energy and changes its temperature. The temperature change envelopes the thermomagnetic layer, thus heating or cooling same. When the temperature of the thermomagnetic layer is adjusted, the magnetization will be increased or decreased for the material. In the case of increasing the magnetization, the magnetic force between the magnetic pin and the thermomagnetic material is increased and the magnetic pin is pulled towards the thermomagnetic layer and the elastic element is deflected. This mechanism allows for individual control of the pin in a simple way by magnetically attracting the pin or holding it in a raised position by the elastic element.

In a further embodiment of the method, it is possible to have intermediate positions for the mechanism by adjusting the temperature of the thermoelectric layer and attracting the magnetic pin only partly and not the complete distance to the thermomagnetic layer. As already explained above, temperatures T_{cold}, T_{c} and Tₕₒₜ are used for actuation, by adjusting the thermoelectric layer to have temperature increase or decrease in steps from T_{cold} to Tₕₒₜ or from Tₕₒₜ to T_{cold}. With this, it is possible to achieve stroke length which is changing in steps.

Further, the invention refers to a first embodiment of a method for using an actuation device according to the invention, with said actuation device forming a matrix comprising a plurality of at least six actuation mechanisms, each of which comprising one magnetic pin to be actuated, with each of the at least six actuation mechanisms comprising a housing element holding an elastic element that is coupled with a bottom end of said magnetic pin and a thermoelectric layer and a thermomagnetic layer, wherein the thermoelectric layer is coupled to the thermomagnetic layer which are both located beneath the elastic element, wherein the thermoelectric layer is connected to an electrical energy source.

The method comprises the following steps:
- supplying electrical energy to said thermoelectric layers by operating said at least one electrical energy source, thereby
- changing the magnetization of said thermomagnetic layers from a nonmagnetic state into a magnetic state or reverse, and
- providing one of attraction and non-attraction of said coupled magnetic pins,
   thereby for each of the at least six actuation mechanisms initiating one of
- a lowered state of the pin and during same providing attraction of said pins and deflection of the elastic element towards the thermomagnetic layer, and
- an initial state of the pin and during same said pin being unattracted towards said thermomagnetic layer and having the elastic element in a rest position.

Actuation mechanism put together into a matrix can provide with this method a simple way to move different pins in different states. By forming a matrix of pins thus being possible to form a matrix which can display a Braille character. Multiple devices can be placed adjacent each other to create a braille refreshable display to have communication of complex text and graphics through tactile sense.

Embodiments of the actuation mechanism and the actuation device and some of the advantages associated with these and further embodiments become apparent by the following detailed description with reference to the accompanying figures. Subjects or parts thereof, which essentially are the same or similar, may be denoted with the same reference numeral. Figures are just schematic illustrations of an embodiment of the invention and show:
- **Fig. 1**: a perspective view of an actuation device according to the invention,
- **Fig. 2**: a top-view of the actuation device,
- **Fig. 3**: a cross-sectional view through section A-A of Fig. 2 of a first embodiment of the actuation device with elevated pins,
- **Fig. 4**: a cross-sectional view the actuation device according to Fig. 3 with non-elevated pins,
- **Fig. 5**: a cross-sectional view of the housing of the actuation device according to Fig. 3,
- **Fig. 6**: a perspective view of a pin,
- **Fig. 7**: a top-view of the elastic element layer,
- **Fig. 8**: a perspective view of a thermoelectric layer,
- **Fig. 9**: a cross-sectional view through section A-A of Fig. 2 of another embodiment of the actuation device with elevated pins, and
- **Fig. 10**: a cross-sectional view through section A-A of Fig. 2 of yet another embodiment of the actuation device with elevated pins.

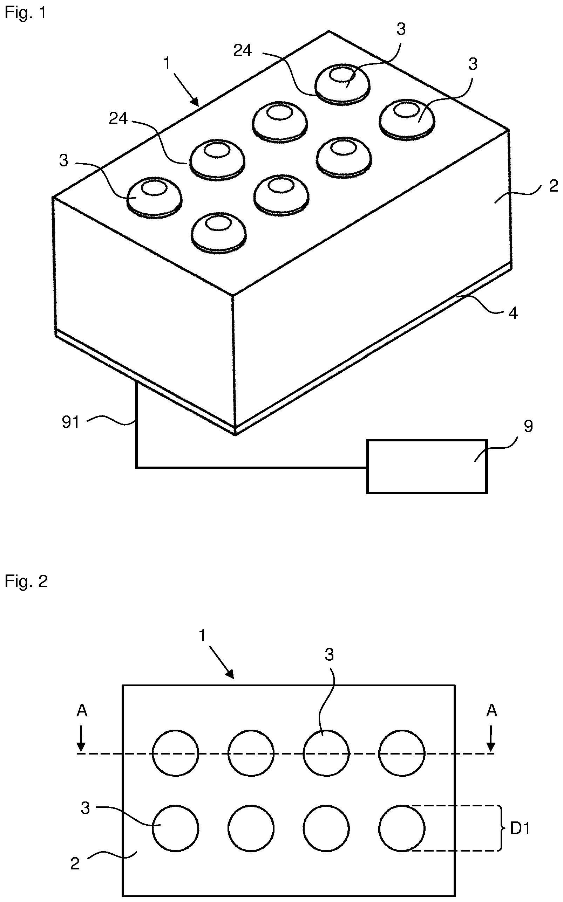

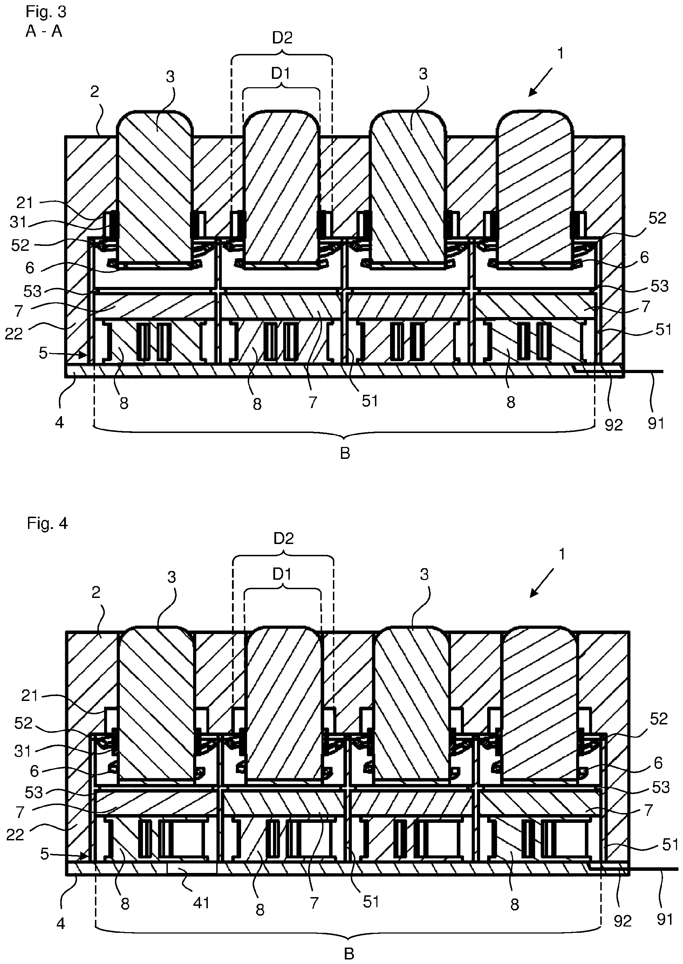

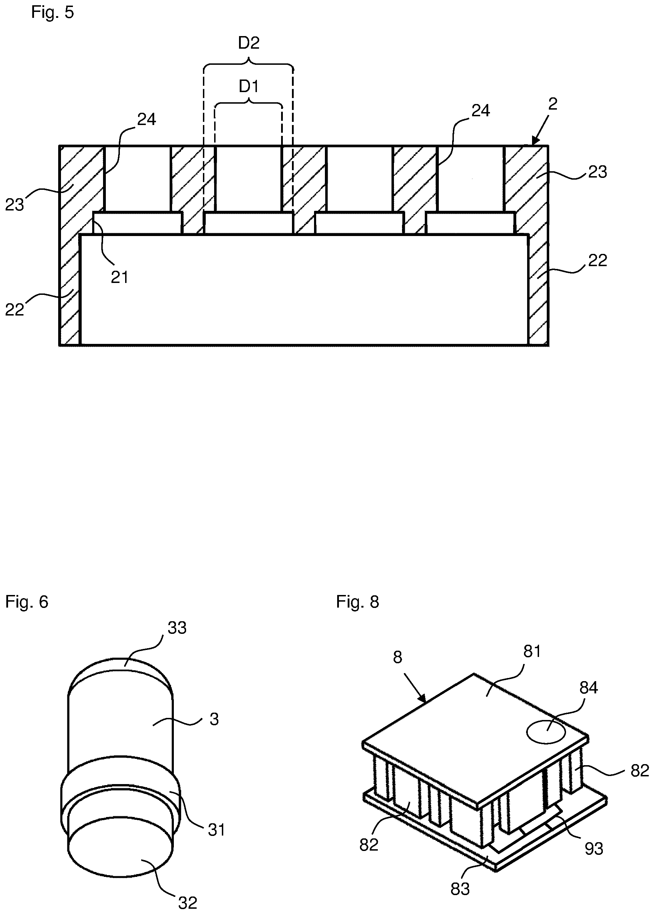

An actuation device 1 shown in **Fig. 1 and 2** comprises an encasement 2, which is shown in **Fig. 3 and 4** in a sectional view A-A. The encasement 2 is also shown in **Fig. 5** and is used to cover and hold the whole assembly of the actuation device 1. Said encasement 2 is connected to a base plate 4 with a base area B and comprises an outer wall 22, arranged onto the base plate 4.

The outer wall 22 extends into a top part 23 having a number of through holes 24, each holding a pin 3, which is held moveable in an up-down-fashion inside said through holes 24.

Each through hole 24 has first diameter D1 of the size corresponding to an outer diameter of each pin 3 and therefore surrounding each pin 3. They provide an outlet passage for an outlet part 33 of said magnetic pin 3. Further each through hole 24 has a second diameter D2 which is larger than the first diameter D1 and forms a recess 21 and surrounds a part of each pin 3.

Adjacent to said recess 21 a housing 5 in located inside the encasement 2, wherein said housing 5 comprises a vertical wall 51, topped by an upper edge 52, which is located next to the recess 21. On the upper edge 51 an elastic element 6 is applied and held. The housing 5 holds not only the elastic element 6, but also the pin 3, a thermomagnetic layer 7 and a thermoelectric layer 8. The housing 5 comprises a circular middle edge 53, located at an inner part of the vertical wall 51. This middle edge 53 is formed as a protrusion directed inwards and serves as a retainer for the thermomagnetic layer 7.

The base plate 4 comprises electrical wirings 92 connected to an electrical energy source 9 via electrical conduits 91. Further, the base plate 4 houses a resistive heater 41 in order to heat the encasement 2.

The magnetic pin 3, shown in **Fig. 6****,** has cylindrical shape with a circular bottom end 32 and an upper end, the so-called outlet part 33 being shaped partially spherical in order to be pleasant to the touch. On its lower half, the pin 3 comprises a ring portion 31 which is initially held in the recess 21 (see Fig. 3 for example) in the encasement 2. The recess 21 as depicted in **Fig. 3 or 4** serves as a retaining step for the ring portion 31, which not only gives a guidance, for the pin 3, but is a limit stop when the pin 3 moves inside the through hole 24 upwards in **Fig. 4. Fig. 3** shows the pin 3 in a raised position. Eight of these pins 3 can used to create one Braille cell matrix for displaying Braille characters as depicted in **Fig. 1****.**

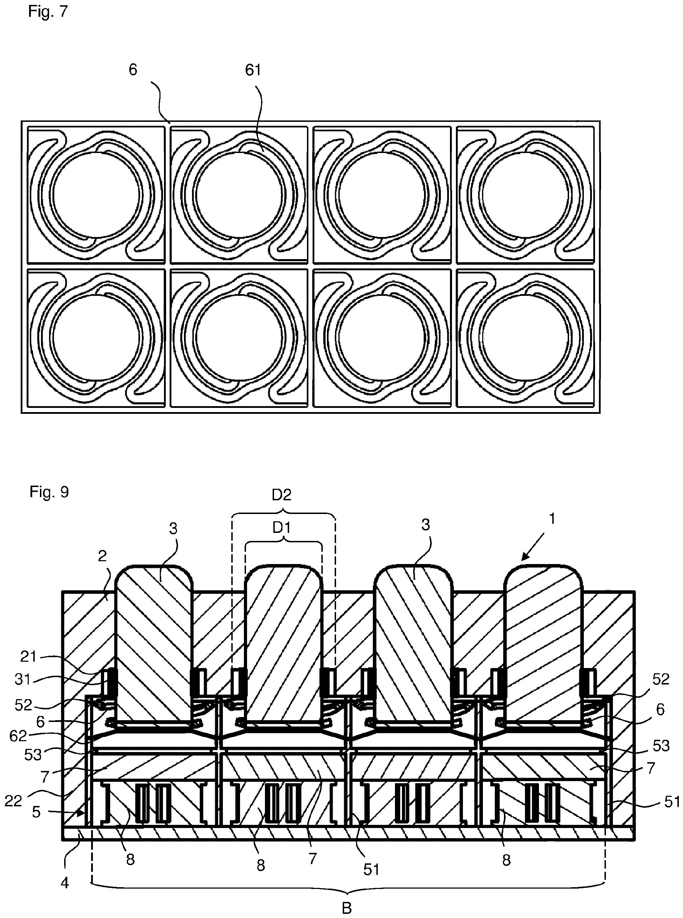

The elastic element is depicted in **Fig. 7** as a planar spring 6 to provide an out of plane movement of the elastic element actuation while occupying a small lateral dimension. The planar spring 6 is essentially composed out of a circular middle area 63 on which the bottom end 32 of the pin 3 is located. From this circular middle area 63 elastic arms 61 stretch outward in a spiral fashion and are connected to a rim 64, which essentially rests on the upper edge 52 of the housing element 5 in a mounting position of the actuation device 1, as shown in either of **Fig. 1, 2****,** **9** **and** **10****.**

The thermomagnetic layer 7 in **Fig. 1, 2****,** **9** **and** **10** has cuboidal shape and made out of a thermomagnetic material, which changes its magnetization according to temperature change from paramagnetic to ferromagnetic. The magnetization properties of the material of the thermomagnetic layer 7 are more important than the shape, which can also be round. Preferred materials are for example: Ni-Mn-Ga, La-Fe-Si, La-Fe-Si-Co or Ni-Mn-In alloys. The thickness of the thermomagnetic layer 7 is adjusted to adjust the magnetic force experienced by the magnetic pin 3.

In **Fig. 8** one thermoelectric layer 8 is shown. The thermoelectric layer 8 is built directly on the base plate 4 and has a ceramic base plate 81 on which elements of thermoelectric material 82 are arranged in alternative fashion to build an array in order to achieve a constant temperature over a defined area. The ceramic base plate 81 holds electrical connections 93 which are connected to the electrical connections 92 in the base plate 4 of the encasement 2. The elements of thermoelectric material 82 are topped by a ceramic top plate 83 which in its mounting position is connected with the thermomagnetic layer 7 with regard to temperature change. In order to monitor the temperature of the thermoelectric material 82, a temperature sensor 84 is embedded into the ceramic top plate 83.

**Fig. 3** shows the full assembled actuation device 1 in its initial state or raised-pin-state, wherein one pin, one part of the elastic element 6, one thermomagnetic element 7 and one thermoelectric element 8 resembles an actuation mechanism. In the initial state of each actuation mechanism the thermomagnetic layer 7 is paramagnetic (high temperature state or low temperature state depending on material). In the initial state the planar spring 6 is not strained, the magnetic pin 3 is pushed into the recess 21 by the pre-strain of the planar spring 6. The magnetic force between the magnetic pin 3 and the thermomagnetic layer 7 is zero or not strong enough to pull the pin 3 down due to the stiffness or spring force of the planar spring 6. The thermoelectric layer 8 maintains the required temperature for the thermomagnetic layer 7, while the base plate 4 has the resistive heater 41 built into it to maintain the overall temperature of the actuation device 1.

Each pin 3 can be actuated by activating the thermoelectric layer 8 to change its temperature individually for the thermomagnetic layer 7 corresponding to a desired movement of the pin 3. The temperature sensor 84 attached to the ceramic top plate 83 of each of the thermomagnetic layers 8 accurately measures the temperature of the thermoelectric layer 7.

The actuation device 1 in **Fig. 9** has an additional plane-shaped elastic element, a shape memory element 62 attached to the bottom of the pin 3, with which the pre-strain of the actuation mechanism is higher and the pin 3 is retractable from its lowered state into the initial state with a higher force. In this configuration the pin 3 can only be moved from one state to another by combining the forces of both components simultaneously. The magnetic force at the raised position is designed to be not enough to pull the pin 3 down (by increasing the magnetization of thermomagnetic material) by increasing the pre-strain of the planar spring accordingly. Once the shape memory alloy pulls the device to the middle the magnetic force becomes (in high magnetization state of thermomagnetic material) large enough to pull the pin down. To move the pin 3 down the shape memory element 62 needs to pull the pin 3 down towards the middle of housing 5.

Once in the closest position to the thermomagnetic layer 7 the pin 3 experiences the largest force (magnetic field gradient is maximum at close contact and decreases when the distance from surface of magnet increases). Thermomagnetic material used in this (for example La-Fe-Si) will have residual magnetization even after transformation. Thus, if the forces are tuned properly, the planar spring 6 will not have enough reset force to be able to pull the pin 3 away from the thermomagnetic layer 8 even after same changing its magnetization. In this case the shape memory element 62 is actuated to pull the pin 3 back and this will reduce the magnetic field gradient and magnetic force enough for the reset force of the elastic spring 6 to take over and pull the pin 3 to the initial state.

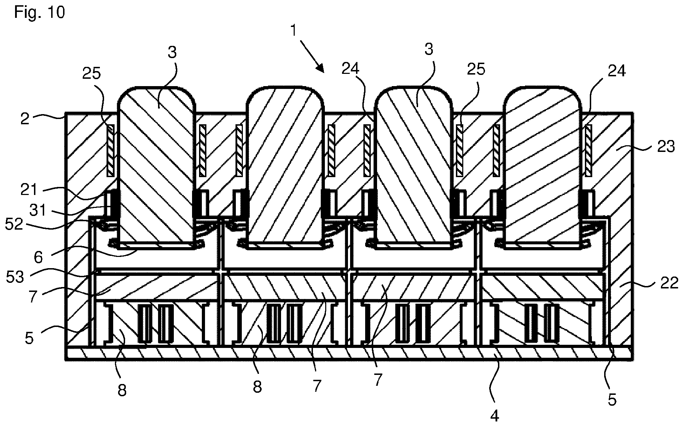

The actuation device 1 in **Fig. 10** has a motion sensor coil 25 surrounding each through hole 24 in the encasement 2. The motion sensor coil 25 is used to sensor the movement of the pin 3 inside the encasement 2.

### LIST OF REFERENCES

- 1: Actuation device
- 2: Outer housing
- 21: Recess
- 22: Outer wall
- 23: Top part
- 24: Through holes
- 25: Motion sensor coil
- 3: Pin
- 31: Ring portion
- 32: Bottom end
- 33: Upper end
- 4: Base plate
- 41: Resistive heater
- 5: Housing element
- 51: Vertical wall
- 52: Upper edge
- 53: Middle edge
- 6: Elastic element layer
- 61: Elastic arms
- 62: Shape memory element
- 63: Middle area
- 7: Thermomagnetic layer
- 8: Thermoelectric layer
- 81: Ceramic base plate
- 82: Thermoelectric element
- 83: Ceramic top plate
- 84: Temperature sensor
- 9: Electrical energy source
- 91: Electrical conduits
- 92: Electrical wiring
- 93: Electrical connections
- B: Base area
- D1: First diameter through hole 24
- D2: Second diameter through hole 24

## Claims

1. Actuation mechanism comprising one pin (3) to be actuated,
**wherein**
said one pin (3) is magnetic, and
the actuation mechanism comprises
- a housing element (5) holding an elastic element (6) that is coupled with a bottom end (32) of said magnetic pin (3),
- a thermoelectric layer (8) and a thermomagnetic layer (7), wherein the thermoelectric layer (8) is coupled to the thermomagnetic layer (7) which are both located beneath the elastic element (6), wherein the thermoelectric layer (8) is connected to an electrical energy source (9), and
wherein said thermoelectric layer (8) is designed to change a magnetization of said thermomagnetic layer (7) from a nonmagnetic state into a magnetic state and reverse, which thermomagnetic layer (7) provides attraction or non-attraction of said coupled magnetic pin (3),
wherein
- during a lowered state of said pin (3) attraction of said pin (3) and deflection of the elastic element (6) towards the thermomagnetic layer (7) is provided,
- during an initial state of said pin (3) said pin (3) being unattracted towards said thermomagnetic layer (7) and having the elastic element (6) in a neutral position.

2. Actuation mechanism according to claim 1,
**characterized in that**
the housing element (5) comprises a vertical wall (51), topped by an upper edge (52), said upper edge (51) holding the elastic element (6).

3. Actuation mechanism according to claim 1 and 2,
**characterized in that**
the housing element (5) comprises a circular middle edge (53), provided at an inner part of the wall (51), said middle edge (53) providing a retainer for the thermomagnetic layer (7).

4. Actuation mechanism according to one of the claims 1 to 3,
**characterized in that**
a height of a section of the vertical wall (51) of the housing element (5) below the circular middle edge (53) corresponds to both, the height of the thermoelectric layer (8) and the thermomagnetic layer (7) placed on said thermoelectric layer (8).

5. Actuation mechanism according to one of the claims 1 to 4,
**characterized in that**
the elastic element (6) is a planar spring (6) or a leaf spring or a spiral leaf spring.

6. Actuation mechanism according to one of the claims 1 to 5,
**characterized in that**
the actuation mechanism comprises a shape memory element (62) which is located beneath the elastic element (6).

7. Actuation device (1), comprising a plurality of actuation mechanisms, each of which comprising one magnetic pin (3) to be actuated,
**characterized in that**
the plurality of actuation mechanisms comprises at least six actuation mechanisms according to at least one of claims 1 to 6.

8. Actuation device (1) according to claim 7,
**characterized in that**
the actuation device comprises an encasement (2), said encasement (2) having
- a base plate (4) with a base area (B) designed to bear the plurality of actuation mechanisms,
- an outer wall (22), arranged onto the base plate (4), said outer wall (22) extending to a top part (23), wherein said top part (23) has a number of through holes (24), each of said through holes (24) being dedicated to one of said pins (3) and providing an outlet passage for an outlet part of said pin (3), wherein each of said through holes (24) has first diameter (D1) surrounding said outlet part of each pin (3) of the size corresponding to an outer diameter of each pin (3), and having a second diameter (D2) surrounding said pin (3) at a part of said pin (3) adjacent to the upper edge (5) of the housing element (5), said second diameter (D2) being larger than said first diameter (D1) and forming an recess (21)
wherein each pin (3) comprises a ring portion (31) forming a step and being positioned within said recess (21) during the initial state of the actuation mechanism.

9. Actuation device according to claim 7 or 8,
**characterized in that**
the base plate (4) comprises at least one electrical wiring (91), wherein said electrical wiring (91) is connected to the electrical energy source (9).

10. Actuation device (1) according to at least one of claims 7 to 9,
**characterized in that**
the plurality of at least six actuation mechanisms is arranged in pairs.

11. Actuation device (1) according to at least one of claims 7 to 10,
comprising the actuation mechanism according to at least one of claims 1 to 6 adapted for actuating one pin (3), wherein the actuation device (1) is adapted for use with Braille refreshable displays.

12. Method for using an actuation mechanism comprising one pin (3) to be actuated, according to at least one of claims 1 to 6,
wherein said one pin (3) is magnetic, and
the actuation mechanism comprises
- a housing element (5) holding an elastic element (6) that is coupled with a bottom end (32) of said magnetic pin (3),
- a thermoelectric layer (8) and a thermomagnetic layer (7), wherein the thermoelectric layer (8) is coupled to the thermomagnetic layer (7) which are both located beneath the elastic element (6), wherein the thermoelectric layer (8) is connected to an electrical energy source (9),
**comprising the steps:**
- supplying electrical energy to said thermoelectric layer (8) by operating said electrical energy source (9), thereby
- changing the magnetization of said thermomagnetic layer (7) from a nonmagnetic state into a magnetic state or reverse and
- providing one of attraction and non-attraction of said coupled magnetic pin (3), thereby initiating one of
- a lowered state of the pin (3) and during same providing attraction of said pin (3) and deflection of the elastic element (6) towards the thermomagnetic layer (7), and
- an initial state of the pin (3) and during same said pin (3) being unattracted towards said thermomagnetic layer (7) and having the elastic element (6) in a rest position.

13. Method for using an actuation device (1) according to at least one of claims 7 to 10, with said actuation device (1) comprising a plurality of at least six actuation mechanisms, each of which comprising one magnetic pin (3) to be actuated, according to at least one of claims 1 to 6,
with each of the at least six actuation mechanisms comprising
- a housing element (5) holding an elastic element (6) that is coupled with a bottom end (32) of said magnetic pin (3),
- a thermoelectric layer (8) and a thermomagnetic layer (7), wherein the thermoelectric layer (8) is coupled to the thermomagnetic layer (7) which are both located beneath the elastic element (6), wherein the thermoelectric layer (8) is connected to an electrical energy source (9),
**comprising the steps:**
- supplying electrical energy to said thermoelectric layers (8) by operating said at least one electrical energy source (9), thereby
- changing the magnetization of said thermomagnetic layers (7) from a nonmagnetic state into a magnetic state or reverse, and
- providing one of attraction and non-attraction of said coupled magnetic pins (3), thereby for each of the at least six actuation mechanisms initiating one of
- a lowered state of the pin (3) and during same providing attraction of said pins (3) and deflection of the elastic element (6) towards the thermomagnetic layer (7), and
- an initial state of the pin (3) and during same said pin (3) being unattracted towards said thermomagnetic layer (7) and having the elastic element (6) in a rest position.

## Patentansprüche

1. Aktuator-Mechanismus mit einem zu betätigenden Stift (3),
**wobei**
der Stift (3) magnetisch ist, und
der Aktuator-Mechanismus
- ein Gehäuseelement (5), das ein elastisches Element (6) haust, das mit einem unteren Ende (32) des magnetischen Stifts (3) gekoppelt ist,
- eine thermoelektrische Schicht (8) und eine thermomagnetische Schicht (7) aufweist, wobei die thermoelektrische Schicht (8) mit der thermomagnetischen Schicht (7) gekoppelt ist, die beide unterhalb des elastischen Elements (6) angeordnet sind, wobei die thermoelektrische Schicht (8) mit einer elektrischen Energiequelle (9) verbunden ist,
und wobei die thermoelektrische Schicht (8) so ausgebildet ist, dass sie eine Magnetisierung der thermomagnetischen Schicht (7) von einem nichtmagnetischen Zustand in einen magnetischen Zustand ändert und umgekehrt, wobei die thermomagnetische Schicht (7) die Anziehung oder Nicht-Anziehung des gekoppelten Magnetstifts (3) bewirkt,
wobei
- während eines abgesenkten Zustands des Stifts (3) eine Anziehung des Stifts (3) und eine Auslenkung des elastischen Elements (6) in Richtung der thermomagnetischen Schicht (7) vorgesehen ist,
- während eines Ausgangszustands des Stifts (3) der Stift (3) nicht in Richtung der thermomagnetischen Schicht (7) angezogen ist und sich das elastische Element (6) in einer neutralen Position befindet.

2. Aktuator-Mechanismus nach Anspruch 1,
**dadurch gekennzeichnet, dass**
das Gehäuseelement (5) eine vertikale Wand (51) aufweist, die von einem oberen Rand (52) überragt wird, wobei der obere Rand (51) das elastische Element (6) hält.

3. Aktuator-Mechanismus nach Anspruch 1 und 2,
**dadurch gekennzeichnet, dass**
das Gehäuseelement (5) einen kreisförmigen Mittelrand (53) aufweist, der an einem inneren Teil der Wand (51) vorgesehen ist, wobei der Mittelrand (53) eine Halterung für die thermomagnetische Schicht (7) bereitstellt.

4. Aktuator-Mechanismus nach einem der Ansprüche 1 bis 3,
**dadurch gekennzeichnet, dass**
eine Höhe eines Abschnitts der vertikalen Wand (51) des Gehäuseelements (5) unterhalb der kreisförmigen Mittelkante (53) sowohl der Höhe der thermoelektrischen Schicht (8) als auch der auf dieser thermoelektrischen Schicht (8) angeordneten thermomagnetischen Schicht (7) entspricht.

5. Aktuator-Mechanismus nach einem der Ansprüche 1 bis 4,
**dadurch gekennzeichnet, dass**
das elastische Element (6) eine Planarfeder (6) oder eine Blattfeder oder eine Spiralblattfeder ist.

6. Aktuator-Mechanismus nach einem der Ansprüche 1 bis 5,
**dadurch gekennzeichnet, dass**
der Aktuator-Mechanismus ein Formgedächtniselement (62) aufweist, das unter dem elastischen Element (6) angeordnet ist.

7. Aktuatorvorrichtung (1) mit einer Vielzahl von Aktuator-Mechanismen, von denen jeder einen zu betätigenden magnetischen Stift (3) aufweist,
**dadurch gekennzeichnet, dass**
die Vielzahl von Aktuator-Mechanismen zumindest sechs Aktuator-Mechanismen nach zumindest einem der Ansprüche 1 bis 6 aufweist.

8. Aktuatorvorrichtung (1) nach Anspruch 7,
**dadurch gekennzeichnet, dass**
der Aktuatorvorrichtung ein Gehäuse (2) aufweist, wobei das Gehäuse (2)
- eine Grundplatte (4) mit einer Grundfläche (B), die so ausgelegt ist, dass sie die Vielzahl der Aktuator-Mechanismen trägt,
- eine Außenwand (22) aufweist, die auf der Grundplatte (4) angeordnet ist, wobei sich die Außenwand (22) zu einem oberen Abschnitt (23) erstreckt, wobei der obere Abschnitt (23) eine Anzahl von Durchgangslöchern (24) aufweist, wobei jedes der Durchgangslöcher (24) einem der Stifte (3) zugeordnet ist und einen Auslassdurchgang für einen Auslassteil des Stifts (3) bereitstellt, wobei jedes der Durchgangslöcher (24) einen ersten Durchmesser (D1) aufweist, der den Auslassteil jedes Stifts (3) mit der Größe umgibt, die einem Außendurchmesser jedes Stifts (3) entspricht, und einen zweiten Durchmesser (D2) aufweist, der den Stift (3) an einem Teil des Stifts (3) angrenzend an die obere Kante (5) des Gehäuseelements (5) umgibt, wobei der zweite Durchmesser (D2) größer als der erste Durchmesser (D1) ist und eine Ausnehmung (21) bildet,
wobei jeder Stift (3) einen Ringabschnitt (31) aufweist, der eine Stufe bildet und während des Ausgangszustands des Aktuator-Mechanismus innerhalb der Ausnehmung (21) angeordnet ist.

9. Aktuatorvorrichtung (1) nach Anspruch 7 oder 8,
**dadurch gekennzeichnet, dass**
die Grundplatte (4) mindestens eine elektrische Leitung (91) umfasst, wobei die elektrische Leitung (91) mit der elektrischen Energiequelle (9) verbunden ist.

10. Aktuatorvorrichtung (1) nach zumindest einem der Ansprüche 7 bis 9,
**dadurch gekennzeichnet, dass**
die Vielzahl von zumindest sechs Aktuator-Mechanismen paarweise angeordnet ist.

11. Aktuatorvorrichtung (1) nach zumindest einem der Ansprüche 7 bis 10,
mit dem Aktuator-Mechanismus nach zumindest einem der Ansprüche 1 bis 6 zur Betätigung eines Stiftes (3), wobei die Aktuatorvorrichtung (1) zur Verwendung mit aktualisierbaren Brailledisplay geeignet ist.

12. Verfahren zur Verwendung eines Aktuator-Mechanismus mit einem zu betätigenden Stift (3), nach zumindest einem der Ansprüche 1 bis 6,
wobei der Stift (3) magnetisch ist, und
der Aktuator-Mechanismus
- ein Gehäuseelement (5), das ein elastisches Element (6) haust, das mit einem unteren Ende (32) des magnetischen Stifts (3) gekoppelt ist,
- eine thermoelektrische Schicht (8) und eine thermomagnetische Schicht (7) aufweist, wobei die thermoelektrische Schicht (8) mit der thermomagnetischen Schicht (7) gekoppelt ist, die beide unterhalb des elastischen Elements (6) angeordnet sind, wobei die thermoelektrische Schicht (8) mit einer elektrischen Energiequelle (9) verbunden ist,
**umfassend die Schritte:**
- Zuführen von elektrischer Energie zu der thermoelektrischen Schicht (8) durch Betreiben der elektrischen Energiequelle (9), dadurch
- Ändern der Magnetisierung der thermomagnetischen Schicht (7) von einem nichtmagnetischen Zustand in einen magnetischen Zustand oder umgekehrt und
- Bereitstellen einer Anziehung oder einer Nicht-Anziehung des gekoppelten Magnetstifts (3),
durch Auslösen eines der Zustände
- eines abgesenkten Zustands des Stifts (3) und währenddessen die Anziehung des Stifts (3) und die Auslenkung des elastischen Elements (6) in Richtung der thermomagnetischen Schicht (7), und
- eines Ausgangszustands des Stifts (3), in dem der Stift (3) nicht in Richtung der thermomagnetischen Schicht (7) angezogen ist und sich das elastische Element (6) in einer Ruheposition befindet.

13. Verfahren zur Verwendung einer Aktuatorvorrichtung nach zumindest einem der Ansprüche 7 bis 10, wobei jede Aktuatorvorrichtung (1) eine Vielzahl von Aktuator-Mechanismen nach zumindest einem der Ansprüche 1 bis 6 aufweist, von denen jeder einen zu betätigenden magnetischen Stift (3) aufweist,
wobei jede der zumindest sechs Aktuator-Mechanismen
- ein Gehäuseelement (5), das ein elastisches Element (6) haust, das mit einem unteren Ende (32) des magnetischen Stifts (3) gekoppelt ist,
- eine thermoelektrische Schicht (8) und eine thermomagnetische Schicht (7) aufweist, wobei die thermoelektrische Schicht (8) mit der thermomagnetischen Schicht (7) gekoppelt ist, die beide unterhalb des elastischen Elements (6) angeordnet sind, wobei die thermoelektrische Schicht (8) mit einer elektrischen Energiequelle (9) verbunden ist,
**umfassend die Schritte:**
- Zuführen von elektrischer Energie zu der thermoelektrischen Schicht (8) durch Betreiben der elektrischen Energiequelle (9), dadurch
- Ändern der Magnetisierung der thermomagnetischen Schicht (7) von einem nichtmagnetischen Zustand in einen magnetischen Zustand oder umgekehrt und
- Bereitstellen einer Anziehung oder einer Nicht-Anziehung des gekoppelten Magnetstifts (3),
durch Auslösen eines der Zustände
- eines abgesenkten Zustands des Stifts (3) und währenddessen die Anziehung des Stifts (3) und die Auslenkung des elastischen Elements (6) in Richtung der thermomagnetischen Schicht (7), und
- eines Ausgangszustands des Stifts (3), in dem der Stift (3) nicht in Richtung der thermomagnetischen Schicht (7) angezogen ist und sich das elastische Element (6) in einer Ruheposition befindet.

## Revendications

1. Mécanisme d'actionnement comprenant une broche (3) à actionner,
**dans lequel**
ladite broche (3) est magnétique et que
le mécanisme d'actionnement comprend
- un élément de logement (5) contenant un élément élastique (6) couplé à une extrémité inférieure (32) de ladite broche magnétique (3),
- une couche thermoélectrique (8) et une couche thermomagnétique (7), la couche thermoélectrique (8) étant couplée à la couche thermomagnétique (7), lesquelles sont toutes deux situées sous l'élément élastique (6), la couche thermoélectrique (8) étant reliée à une source d'énergie électrique (9), et
- ladite couche thermoélectrique (8) étant conçue pour modifier l'aimantation de ladite couche thermomagnétique (7) d'un état non magnétique à un état magnétique et inversement, ladite couche thermomagnétique (7) assurant l'attraction ou la non-attraction de ladite broche magnétique (3) couplée, étant entendu que
- pendant l'état abaissé de ladite broche (3), l'attraction de ladite broche (3) et la déflexion de l'élément élastique (6) vers la couche thermomagnétique (7) sont assurées,
- pendant un état initial de ladite broche (3), ladite broche (3) n'est pas attirée par ladite couche thermomagnétique (7) et l'élément élastique (6) est en position neutre.

2. Mécanisme d'actionnement selon la revendication 1,
**caractérisé en ce que**
l'élément de logement (5) comprend une paroi verticale (51), surmontée d'un bord supérieur (52), ledit bord supérieur (51) retenant l'élément élastique (6).

3. Mécanisme d'actionnement selon la revendication 1 et 2,
**caractérisé en ce que**
l'élément de logement (5) comprend un bord central circulaire (53), situé à l'intérieur de la paroi (51), ledit bord central (53) servant de support à la couche thermomagnétique (7).

4. Mécanisme d'actionnement selon l'une des revendications 1 à 3,
**caractérisé en ce que**
la hauteur d'une section de la paroi verticale (51) de l'élément de logement (5) en dessous du bord central circulaire (53) correspond à la fois à la hauteur de la couche thermoélectrique (8) et à celle de la couche thermomagnétique (7) placée sur ladite couche thermoélectrique (8).

5. Mécanisme d'actionnement selon l'une des revendications 1 à 4,
**caractérisé en ce que**
l'élément élastique (6) est un ressort planaire (6) ou un ressort à lames ou un ressort à lames en spirale.

6. Mécanisme d'actionnement selon l'une des revendications 1 à 5,
**caractérisé en ce que**
le mécanisme d'actionnement comprend un élément à mémoire de forme (62) situé sous l'élément élastique (6).

7. Dispositif d'actionnement (1), comprenant une pluralité de mécanismes d'actionnement, chacun d'entre eux comprenant une broche magnétique (3) à actionner,
**caractérisé en ce que**
la pluralité de mécanismes d'actionnement comprend au moins six mécanismes d'actionnement selon au moins l'une des revendications 1 à 6.

8. Dispositif d'actionnement (1) selon la revendication 7,
**caractérisé en ce que**
le dispositif d'actionnement comprend un boîtier (2), ledit boîtier (2) possédant
- une plaque de base (4) avec une surface de base (B) conçue pour supporter la pluralité de mécanismes d'actionnement,
- une paroi extérieure (22) disposée sur la plaque de base (4), ladite paroi extérieure (22) s'étendant jusqu'à une partie supérieure (23), ladite partie supérieure (23) présentant un certain nombre de trous traversants (24), chacun desdits trous traversants (24) étant dédié à l'une desdites broches (3) et fournissant un passage de sortie pour une partie de sortie de ladite broche (3), chacun desdits trous traversants (24) ayant un premier diamètre (D1) entourant ladite partie de sortie de chaque broche (3) de la taille correspondant à un diamètre extérieur de chaque broche (3), et ayant un deuxième diamètre (D2) entourant ladite broche (3) au niveau d'une partie de ladite broche (3) adjacente au bord supérieur (5) de l'élément de logement (5), ledit deuxième diamètre (D2) étant plus grand que ledit premier diamètre (DI) et formant un renfoncement (21),
chaque broche (3) comprenant une partie annulaire (31) formant une étape et étant positionnée à l'intérieur dudit renfoncement (21) pendant l'état initial du mécanisme d'actionnement.

9. Dispositif d'actionnement selon la revendication 7 ou 8,
**caractérisé en ce que**
la plaque de base (4) comprend au moins un câblage électrique (91), ledit câblage électrique (91) étant relié à la source d'énergie électrique (9).

10. Dispositif d'actionnement (1) selon au moins l'une des revendications 7 à 9,
**caractérisé en ce que**
la pluralité d'au moins six mécanismes d'actionnement est disposée par paires.

11. Dispositif d'actionnement (1) selon au moins l'une des revendications 7 à 10, comprenant le mécanisme d'actionnement selon au moins l'une des revendications 1 à 6, adapté pour actionner une broche (3), le dispositif d'actionnement (1) étant adapté pour être utilisé avec des afficheurs Braille rafraîchissables.

12. Méthode d'utilisation d'un mécanisme d'actionnement comprenant une broche (3) à actionner, selon au moins l'une des revendications 1 à 6,
dans lequel ladite broche (3) est magnétique et que
le mécanisme d'actionnement comprend
- un élément de logement (5) contenant un élément élastique (6) couplé à une extrémité inférieure (32) de ladite broche magnétique (3),
- une couche thermoélectrique (8) et une couche thermomagnétique (7), la couche thermoélectrique (8) étant couplée à la couche thermomagnétique (7), lesquelles sont toutes deux situées sous l'élément élastique (6), la couche thermoélectrique (8) étant reliée à une source d'énergie électrique (9),
**comprenant les étapes suivantes** :
- la fourniture de l'énergie électrique à ladite couche thermoélectrique (8) en exploitant ladite source d'énergie électrique (9), ce qui a pour effet
- le changement de la magnétisation de ladite couche thermomagnétique (7) d'un état non magnétique à un état magnétique ou inversement et
- l'attraction et la non-attraction de ladite broche magnétique (3) couplée, ce qui déclenche l'une des actions suivantes :
- un état d'abaissement de la broche (3) et, pendant ce temps, l'attraction de ladite broche (3) et la déflexion de l'élément élastique (6) vers la couche thermomagnétique (7), et
- un état initial de la broche (3) et, pendant ce temps, ladite broche (3) n'étant pas attirée vers la couche thermomagnétique (7) et l'élément élastique (6) étant en position de repos.

13. Méthode d'utilisation d'un dispositif d'actionnement (1) selon au moins l'une des revendications 7 à 10, ledit dispositif d'actionnement (1) comprenant une pluralité d'au moins six mécanismes d'actionnement, chacun comprenant une broche magnétique (3) à actionner, selon au moins l'une des revendications 1 à 6,
chacun des au moins six mécanismes d'actionnement comprenant
- un élément de logement (5) contenant un élément élastique (6) couplé à une extrémité inférieure (32) de ladite broche magnétique (3),
- une couche thermoélectrique (8) et une couche thermomagnétique (7), la couche thermoélectrique (8) étant couplée à la couche thermomagnétique (7), lesquelles sont toutes deux situées sous l'élément élastique (6), la couche thermoélectrique (8) étant reliée à une source d'énergie électrique (9),
**comprenant les étapes suivantes** :
- la fourniture de l'énergie électrique aux couches thermoélectriques (8) en exploitant au moins une source d'énergie électrique (9), ce qui a pour effet
- le changement de la magnétisation desdites couches thermomagnétiques (7) d'un état non magnétique à un état magnétique ou inversement et
- l'attraction et la non-attraction desdites broches magnétiques (3) couplées, ce qui, pour chacun des au moins six mécanismes d'actionnement, déclenche l'une des actions suivantes :
- un état d'abaissement de la broche (3) et, pendant ce temps, l'attraction desdites broches (3) et la déflexion de l'élément élastique (6) vers la couche thermomagnétique (7), et
- un état initial de la broche (3) et, pendant ce temps, ladite broche (3) n'étant pas attirée vers la couche thermomagnétique (7) et l'élément élastique (6) étant en position de repos.
